# EUROPÄISCHE PATENTSCHRIFT

(11) **EP 3 333 405 B1**
(45) Veröffentlichungstag und Bekanntmachung des Hinweises auf die Patenterteilung: **12.05.2021**
(21) Anmeldenummer: 17206108.7
(22) Anmeldetag: 08.12.2017
(51) Int. Cl.: F02M 21/02, G05D 16/20

(54) **ZUMESSEINHEIT FÜR EINEN MIT GAS BETRIEBENEN VERBRENNUNGSMOTOR**
METERING UNIT FOR A GAS OPERATED COMBUSTION ENGINE
UNITÉ DE DOSAGE POUR UN MOTEUR À COMBUSTION INTERNE FONCTIONNANT AU GAZ

(30) Priorität: 08.12.2016 DE 102016123828
(43) Veröffentlichungstag der Anmeldung: 13.06.2018
(73) Patentinhaber: VOLKSWAGEN AKTIENGESELLSCHAFT, 38440 Wolfsburg (DE)
(72) Erfinder: KLÜTING, Christian-B., 38440 Wolfsburg (DE); BEGER, Frank, 38446 Wolfsburg (DE)
(74) Vertreter: Gulde & Partner

(56) Entgegenhaltungen:
- EP-A1- 0 761 951
- EP-A2- 0 420 599
- CN-A- 1 675 460
- JP-A- S60 140 044
- US-A- 4 858 583

## Beschreibung

Die Erfindung betrifft eine Zumesseinheit für einen mit einem brennbaren Gas betriebenen Verbrennungsmotor, einen Verbrennungsmotor mit einer solchen Zumesseinheit sowie ein Verfahren zu Druckregelung in einer Zumesseinheit.

Aus dem Stand der Technik sind Verbrennungsmotoren bekannt, welche mit einem brennbaren Gas, beispielsweise verflüssigtes Erdgas (LNG - Liquified Natural Gas) oder unter Druck bevorratetes Erdgas (CNG - Compressed Natural Gas), betrieben werden. Insbesondere bei unter Druck bevorratetem Erdgas (CNG) stellt sich die Herausforderung, das Gas in die Brennräume des Verbrennungsmotors zu fördern. Da Gase im Vergleich zu (quasi inkompressiblen) Flüssigkeiten eine deutlich höhere Kompressibilität aufweisen, kann ein solches Gas nicht mit einer konventionellen Kraftstoffpumpe in den Brennraum des Verbrennungsmotors eingespritzt werden. Zwar ist eine Direkteinblasung des brennbaren Gases (analog einer Direkteinspritzung von flüssigem Kraftstoff) in den Brennraum des Verbrennungsmotors möglich, jedoch erfordert dies ein relativ hohes Druckniveau im Gastank von mindestens 20 bar, wodurch nur eine unvollständige Entleerung des Gastanks möglich ist und somit die Reichweite eines Kraftfahrzeuges deutlich reduziert wird.

Hoher Aufwand und hohe Kosten für die Gasdruckregelung und Brenngaszumessung bei Gasmotoren führen dazu, dass vergleichsweise komplexe Systeme notwendig sind, um die Brenngasversorgung an den dynamischen Betrieb des Verbrennungsmotors anzupassen. Um beim Einsatz von aus dem Stand der Technik bekannten Gaseinblasventilen aufgrund deren geringen Strömungsquerschnitten eine Volllast des Verbrennungsmotors darstellen zu können, ist bei einer solchen Gasanlage ein Vorlaufdruck von ca. 8 bar notwendig. Dies führt dazu, dass eine vergleichsweise große Gasmenge in dem Gastank verbleiben muss, um dieses Druckniveau sicherstellen zu können. Dadurch ist die Reichweite eines Kraftfahrzeuges mit einer solchen Gaseinlage begrenzt. Je geringer der benötigte Vordruck ist, desto weiter kann der Gastank des Kraftfahrzeuges leergefahren werden, was die Fahrzeugreichweite steigert. Aus der EP 0 863 300 B1 ist eine Vorrichtung zur Versorgung eines Verbrennungsmotors mit einem gasförmigen Brennstoff bekannt, wobei ein Speisungssystem für den gasförmigen Brennstoff vorgesehen ist, wobei für jeden Zylinder des Verbrennungsmotors ein eigenes Einspritzventil zum Einbringen von dem gasförmigen Kraftstoff in den jeweiligen Ansaugkanal des Zylinders vorgesehen ist, wobei jedes Einspritzventil aus einem Zumessventil und einem Einstellventil besteht, wobei das Einstellventil eine Steuerungskammer aufweist, welche stromaufwärts der Drosselklappe an einem Ansaugkrümmer des Verbrennungsmotors angeschlossen ist. Eine solche Vorrichtung ist jedoch vergleichsweise aufwendig und teuer. Zudem ist die Mischstrecke für eine Vermischung des Brenngases mit der Frischluft vergleichsweise kurz, sodass eine optimale Gemischaufbereitung für eine emissionsarme Verbrennung nicht unter allen Betriebszuständen sichergestellt werden kann.

Aus der EP 2 615 278 A2 sind eine Dosiereinrichtung mit einem Gasmischer und ein Verfahren zur Steuerung der Gemischbildung bekannt. Dabei sind ein oder mehrere Gasflaschen über eine gemeinsame Leitung mit einer Mischkammer verbunden, wobei in der gemeinsamen Leitung ein Druckregler vorgesehen ist, um den Zulaufdruck des Brenngases zu der Mischkammer zu regeln.

Die EP 0 420 599 A2 offenbart eine Gaszumesseinheit für einen Verbrennungsmotor, welche eingangsseitig mit einem Gastank und ausgangsseitig mit einer Gemischbildungsvorrichtung für den Verbrennungsmotor verbunden ist, wobei die Gaszumesseinheit einen Gasdruckregler mit einem Vordruckregler und einem dem Vordruckregler nachgeschalteten Hauptdruckregler aufweist.

Aus der US 4 858 583 A ist eine Zumesseinheit für einen mit einem brennbaren Gas betreibbaren Verbrennungsmotor bekannt, wobei die Zumesseinheit eingangsseitig mit einem Gastank und ausgangsseitig mit einer Gemischbildungsvorrichtung verbunden ist. Die Zumesseinheit weist dazu einen Gasdruckregler und ein Brenngaszumessventil auf.

Aus der JP 60 140 044 ist ein Druckregler mit einem Hauptdruckregler zur Steuerung des Gasdrucks eines brennbaren Gases und einem weiteren Druckregler, zur Steuerung der in den Ansaugtrakt eines Gasmotors eingebrachten Gasmenge. Dabei sind die beiden Druckregler in einem gemeinsamen Gehäuse angeordnet, wodurch die Oberfläche der beiden Druckregler verringert wird und somit die Wärmeübertragung von dem Verbrennungsmotor auf den Druckregler verringert wird.

Aus der EP 0 761 951 A1 ist ein mit Erdgas betriebener Verbrennungsmotor mit einer Zumesseinheit bekannt, welche einen Vordurckregler und einen Hauptdruckregler umfasst. Ferner ist im Ansaugsystem des Verbrennungsmotors eine Gemischbildungsvorrichtung angeordnet, in welcher das Erdgas mit der angesaugten Frischluft vermischt und den Brennräumen des Verbrennungsmotors zugeführt wird.

Ferner ist aus dem Stand der Technik eine Gasanlage bekannt, bei der im Vorlauf der Gasdruck über einen mehrstufigen Regler geregelt wird und dann über einen Quantitätsregler oder eine Drosselklappe dem Ansaugtrakt des Verbrennungsmotors zugeführt wird.

Die bekannten Lösungen sind entweder nicht für den hochdynamischen Betrieb, wie er in Verbrennungsmotoren in PKW und Nutzfahrzeugen üblich ist, geeignet, oder sehr aufwendig und daher eher für stationäre Gasmotoren vorgesehen. Da bei Verbrennungsmotoren, insbesondere bei aufgeladen Verbrennungsmotoren, die benötigte Gas- und Frischluftmenge zwischen einem Leerlaufbetrieb und einem Volllastbetrieb sich um bis zu einem Einhundertfachen unterscheidet, ist eine extrem genaue Regelung durch den Druckregler erforderlich, sodass bei der in der EP 2 615 278 A vorgeschlagenen Dosiereinrichtung kleine Abweichungen zu beträchtlichen Schwankungen und Ungenauigkeiten in der Regelung zu spürbaren Komforteinbußen und einer Emissionsverschlechterung des Verbrennungsmotors, insbesondere im Leerlaufbetrieb (sogenanntes Leerlaufruckeln) führen können.

Der Erfindung liegt nun die Aufgabe zugrunde, eine Zumesseinheit vorzuschlagen, welche die aus dem Stand der Technik bekannten Nachteile überwindet und vergleichsweise kostengünstig eine sehr genaue Zumessung des brennbaren Gases auch in einem hochdynamischen Betrieb ermöglicht.

Erfindungsgemäß wird die Aufgabe durch eine Zumesseinheit gemäß dem Anspruch 1 gelöst. Die Zumesseinheit ist eingangsseitig zumindest mittelbar mit einer Gasversorgung und ausgangsseitig mit einer Gemischbildungsvorrichtung zur Brennstoffaufbereitung des dem Verbrennungsmotor zugeführten Gasgemischs verbindbar. Die Zumesseinheit weist einen Gasdruckregler und ein Brenngaszumessventil auf, wobei das Brenngaszumessventil geregelt, vorzugsweise elektrisch geregelt, ist. Durch einen dem Brenngaszumessventil vorgeschalteten Gasdruckregler kann der Regelbereich des Brenngaszumessventils deutlich verringert werden, wodurch eine einfachere und exaktere Zumessung des Brenngases möglich ist. Ohne einen vorgeschalteten Gasdruckregler wird das Brenngaszumessventil mit einem konstanten Druck beaufschlagt, wobei das Brenngaszumessventil den gesamten Motorbedarfsbereich als Dynamikumfang abdecken muss, das heißt sowohl eine Kleinstmengenfähigkeit im Leerlaufbetrieb als auch eine Vollastsituation. Dabei kann das Verhältnis der benötigten Brenngasmenge zwischen einem Betriebspunkt mit maximalem Gasbedarf und minimalem Gasbedarf bis zu 100:1 betragen. Durch eine Anpassung des Betriebsdrucks in Abhängigkeit von einem Druck und/oder einer Strömungsgeschwindigkeit der Frischluft im Ansaugkanal kann der Dynamikumfang des Brennstoffzumessventils auf ein Verhältnis von 10:1 reduziert werden. Dabei wird der Gasdruck durch den Druckregler vorzugsweise auf ein konstantes Vielfaches des Drucks im Ansaugtrakt geregelt. Der Gasdruckregler weist vorzugsweise eine Beheizmöglichkeit, insbesondere über einen elektrischen Heizwiderstand oder einen Anschluss an den Kühlwasserkreislauf des Verbrennungsmotors auf, um Funktionsstörungen durch ein Einfrieren des Reglers durch die Expansionskälte des Gases (Joule-Thomsen-Effekt) sicher auszuschließen.

Durch die in den abhängigen Ansprüchen aufgeführten Merkmale sind vorteilhafte Verbesserungen und Weiterentwicklungen der im unabhängigen Anspruch angegebenen Zumesseinheit möglich.

Erfindungsgemäß ist vorgesehen, dass der Gasdruckregler einen Vordruckregler und einen in Strömungsrichtung des brennbaren Gases durch die Zumesseinheit dem Vordruckregler nachgeschalteten Hauptdruckregler aufweist. Durch einen Vordruckregler kann die Regelgenauigkeit des Hauptdruckreglers weiter verbessert werden, da an dem Hauptdruckregler nicht mehr der Druck der (Hochdruck-)Gasversorgung anliegt, sondern ein durch den Vordruckregler bereits deutlich reduzierter Druck. Dabei kann der Vordruckregler sowohl einstufig als auch mehrstufig ausgeführt sein. Dabei ist je nach Druckgefälle eine ein- oder mehrstufige Druckreduzierung sinnvoll, da bei einer starken Druckreduzierung durch die Expansion dem Gas verhältnismäßig viel Energie entzogen wird, was zu einem Einfrieren des entsprechenden Ventils führen kann. Dabei kann der Vordruckregler beheizbar ausgeführt werden, um die Gefahr eines Einfrierens zu vermeiden.

Erfindungsgemäß ist dabei vorgesehen, dass zwischen dem Vordruckregler und dem Hauptdruckregler ein Druckbegrenzungsventil oder ein Sicherheitsventil angeordnet ist. Durch das Druckbegrenzungsventil kann ein thermisch bedingter Überdruck abgebaut werden. Dadurch kann verhindert werden, dass bei einem erneuten Motorstart eine Überfettung des Gemisches erfolgt, welche zu Startschwierigkeiten führen kann, bei denen ein sicheres Anspringen des Verbrennungsmotors nicht mehr gewährleistet ist.

Erfindungsgemäß ist vorgesehen, dass der Gasdruckregler mittels einer Zusatzkraft, insbesondere mittels einer Feder, belastet ist. Durch eine Druckbelastung kann der Gasdruckregler für einen Luftdruckbereich bei normalen Außenbedingungen und einem Höhenbereich der im Wesentlichen Flachland und Mittelgebirge umfasst, ohne zusätzliche Regelungstechnik abgestimmt werden. Es handelt sich hierbei um eine "Kompromisseinstellung", welche kostengünstig ist, jedoch den Einsatz in extremen Umgebungsbedingungen, beispielsweise im Hochgebirge, einschränkt.

Gemäß einer vorteilhaften Ausführungsform der Zumesseinheit ist vorgesehen, dass der Gasdruckregler mit einer Unterdruckquelle, insbesondere mit einer Vakuumdose, verbunden ist. Durch eine Vakuumdose kann der Gasdruckregler gegen die Auswirkungen der Störgröße "Luftdruck der Umgebungsluft" immunisiert werden und somit im Wesentlichen unabhängig von dem Umgebungsdruck betrieben werden. Alternativ zu einer Vakuumdose kann auch beispielsweise eine Unterdruckpumpe eines Bremskraftverstärkers in Zusammenwirken mit einem Druckregelventil genutzt werden, sodass eine pneumatisch aktive Drucksteuerung erfolgt.

Erfindungsgemäß ist dabei vorgesehen, dass der Gasdruckregler ein Kompensationselement aufweist, mit welchem auf den Gasdruckregler wirkende Störgrößen aktiv eliminiert werden. Alternativ zu einer passiven Kompensation der Störgröße "Luftdruck der Umgebung" kann ein aktiver Ausgleich der Störgröße erfolgen, wobei durch das Kompensationselement ein zumindest teilweiser Ausgleich der Störgröße erfolgt.

Bevorzugt ist dabei, wenn das Kompensationselement eine Unterdruckdose umfasst. Durch eine Unterdruckdose mit einem variablen Unterdruck kann auf einfache Art und Weise eine Kompensation von Druckunterschieden beim Luftdruck der Umgebungsluft erfolgen, wodurch eine verbesserte Druckregelung durch den Gasdruckregler möglich ist. Zusätzlich sinkt die Mengenspreizung des Zumessventils, wodurch eine bessere Zumessgenauigkeit erreicht wird. Dies kann dazu genutzt werden, die Verbrennung des Verbrennungsmotors zu optimieren und somit die Emissionen zu senken.

Erfindungsgemäß ist dabei vorgesehen, dass das Kompensationselement einen elektrischen Aktuator zur Kompensation von auf den Druckregler einwirkenden Störgrößen aufweist. Durch einen elektrischen Aktuator kann auf einfache Art eine aktive Kompensation von Störgrößen erfolgen. Als elektrischer Aktuator sind dabei einfache und kostengünstige Bauelemente wie ein Elektromagnet oder ein Torquemotor vorgesehen, welche die notwendigen Kompensationsbeziehungsweise Korrekturkräfte erzeugen.

Gemäß einer weiteren vorteilhaften Weiterbildung der Erfindung ist vorgesehen, dass das Brenngaszumessventil als ein Proportionalventil mit einem stetig verstellbaren Ventilquerschnitt ausgebildet ist. Dabei ist das Brenngaszumessventil dazu ausgelegt, kontinuierlich den notwendigen Gasmassenstrom bereitzustellen, um eine einfache und genaue Zumessung des brennbaren Gases aus der Brenngasversorgung in die Gemischbildungsvorrichtung zu ermöglichen. In einer weiteren Verbesserung ist eine Lagerückmeldung des Schließgliedes vorgesehen, wodurch eine präzisere Vorsteuerung der Gasmenge erreicht werden kann.

Besonders bevorzugt ist dabei, wenn das Brenngaszumessventil eine Absperrfunktion aufweist. Durch eine Absperrfunktion kann ein unerwünschtes Ausströmen von brennbarem Gas, insbesondere bei einem Stopp des Verbrennungsmotors, vermieden werden.

Alternativ ist mit Vorteil vorgesehen, dass dem Brenngaszumessventil eine Absperrvorrichtung, insbesondere ein Absperrventil, vorgeschaltet oder nachgeschaltet ist. Durch ein zusätzliches Absperrventil stromaufwärts oder stromabwärts des Brenngaszumessventils kann ebenfalls ein unkontrolliertes Ausströmen von brennbarem Gas verhindert werden. Dabei wird ein Absperrventil stromabwärts des Gasdruckreglers und stromaufwärts der Brenngaszumesseinheit bevorzugt, um den Zustrom von brennbarem Gas bereits vor der Brenngaszumesseinheit unterbrechen zu können.

In einer bevorzugten Ausführungsform der Erfindung ist vorgesehen, dass das Brenngaszumessventil als ein druckausgeglichenes Ventil ausgeführt ist. Durch ein druckausgeglichenes Ventil sind nur geringe Kräfte zum Öffnen und Schließen des Ventils notwendig, wodurch zum einen eine hohe Zumessgenauigkeit und zum anderen eine hohe Verstelldynamik erreicht werden.

Gemäß einer weiteren, vorteilhaften Weiterbildung der Zumesseinheit ist vorgesehen, dass die Zumesseinheit einen Drucksensor und/oder einen Temperatursensor aufweist. Durch einen Drucksensor und/oder einen Temperatursensor ist zum einen ein Funktionsüberwachung der Zumesseinheit möglich, zum anderen ist eine (weitere) Kompensation der durch das Brenngaszumessventil eindosierten Gasmenge in Abhängigkeit von der Temperatur und dem Druck des Gases stromaufwärts des Brenngaszumessventils möglich.

In einer bevorzugten Ausführungsform der Erfindung ist vorgesehen, dass zumindest der Hauptdruckregler, der Temperatursensor, der Niederdrucksensor, das dritte Absperrventil und das Brenngaszumessventil als Baugruppe mit einem gemeinsamen Gehäuse ausgeführt werden. Dadurch entsteht eine kompakte Baugruppe, welche einfach und kostengünstig zu montieren ist. Zusätzlich können weitere Komponenten der Zumesseinheit, insbesondere ein Filter und/oder ein oder mehrere Vordruckregler in die Baugruppe integriert werden.

Erfindungsgemäß wird ein Verbrennungsmotor mit einem Ansaugtrakt, mindestens einem Brennraum, vorzugsweise mindestens drei Brennräumen, sowie mit einem Abgastrakt vorgeschlagen, wobei im Ansaugtrakt eine Gemischbildungsvorrichtung angeordnet ist und wobei die Gemischbildungsvorrichtung durch eine erfindungsgemäße Zumesseinheit mit einem brennbaren Gas aus einer Gasquelle versorgt wird.

Erfindungsgemäß wird ferner ein Verfahren zur Druckregelung in einer erfindungsgemäßen Zumesseinheit eines mit einem brennbaren Gas betriebenen Verbrennungsmotors vorgeschlagen, welches folgende Schritte umfasst:
- Regelung des Brenngasdrucks in Abhängigkeit von einem in einem Ansaugtrakt des Verbrennungsmotors ermittelten Druck durch den Gasdruckregler,
- Beaufschlagung des Brenngaszumessventils mit dem durch den Gasdruckregler eingestellten Druck,
- Eindosierung der gewünschten Gasmenge in die Gemischbildungsvorrichtung durch das Brenngaszumessventil.

Durch ein solches Verfahren ist eine besonders genaue Druckregelung für das brennbare Gas möglich, wodurch sich die Dosiergenauigkeit des Brenngaszumessventils erhöhen lässt. Dadurch kann eine besonders saubere und emissionsarme Verbrennung in den Brennräumen des Verbrennungsmotors erreicht werden. Zudem kann die Reichweite bei einem Kraftfahrzeug mit einem gasförmigen Brennstoff erhöht werden, da die Gasflaschen weiter entleert werden können und das Druckniveau abgesenkt werden kann.

In einer bevorzugten Ausführungsform des Verfahrens ist vorgesehen, dass eine Regelung des Brenngasdrucks auf ein Vielfaches des jeweiligen Druckes in der Gemischbildungsvorrichtung erfolgt. Dabei wird das Vielfache durch einen im Wesentlichen konstanten Faktor k, welcher zwischen 2 und 50, vorzugsweise zwischen 2 und 10, liegt erzeugt.

Die verschiedenen in dieser Anmeldung genannten Ausführungsformen der Erfindung sind, sofern im Einzelfall nicht anders ausgeführt, mit Vorteil miteinander kombinierbar. Dabei sind gleiche Bauteile oder Bauteile mit der gleichen Funktion durch gleiche Bezugsziffern gekennzeichnet.

Die Erfindung wird nachfolgend in Ausführungsbeispielen anhand der zugehörigen Zeichnungen erläutert. Es zeigen:
- Figur 1: einen schematischen Aufbau eines mit einem brennbaren Gas betriebenen Verbrennungsmotors, bei dem die Gasversorgung mittels einer erfindungsgemäßen Zumesseinheit erfolgt;
- Figur 2: eine Prinzipskizze eines Ausführungsbeispiel für eine erfindungsgemäße Zumesseinheit; und
- Figur 3: ein Beispiel für eine nicht erfindungsgemäße Zumesseinheit.

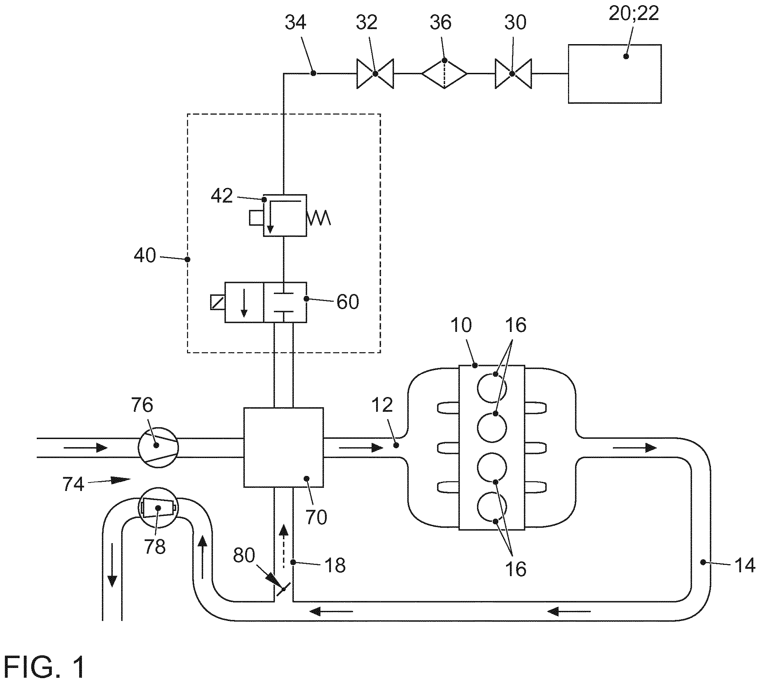

Figur 1 zeigt einen Verbrennungsmotor 10 mit einem Ansaugtrakt 12, einem Abgastrakt 14 sowie mit mehreren Brennräumen 16, in denen ein gasförmiger Brennstoff zum Antrieb des Verbrennungsmotors 10 verbrannt werden kann. Der Verbrennungsmotor 10 kann einen Turbolader 74 aufweisen, wobei in bekannter Weise eine Turbine 78 des Turboladers 74 im m Abgastrakt 14 des Verbrennungsmotors 10 angeordnet ist und einen Verdichter 76 des Turboladers 74 im Ansaugtrakt 12 des Verbrennungsmotors 10 antreibt, um die Frischluft im Ansaugtrakt 12 zu verdichten und somit die Füllung der Brennräume 16 zu verbessern. Ferner ist im Ansaugtrakt 12 stromab des Verdichters 76 eine Gemischbildungsvorrichtung 70 angeordnet, in der die Frischluft aus dem Ansaugtrakt 12 mit einem brennbaren Gas aus einer Brenngasversorgung 20 vermischt und somit zu einem brennbaren Gasgemisch für den Verbrennungsmotor 10 aufbereitet wird. Ferner kann eine Abgasrückführung 18 vorgesehen sein, welche den Abgastrakt 14 mit dem Ansaugtrakt 12 verbindet und somit eine Rückführung von verbrannten oder teilverbrannten Kraftstoffbestandteilen des gasförmigen Brennstoffs in den Ansaugtrakt 12 ermöglicht. Dabei mündet die Abgasrückführung 18 vorzugsweise in die Gemischbildungsvorrichtung 70, um eine bestmögliche Vermischung mit den brennbaren Gas aus der Brenngasversorgung 20 und der Frischluft zu ermöglichen und so die bekannten Vorteile einer Abgasrückführung auf die Emissionsbildung bei der Verbrennung in den Brennräumen 16 des Verbrennungsmotors 10 zu nutzen.

Zur Brenngasversorgung der Gemischbildungsvorrichtung 70 ist eine Zumesseinheit 40 vorgesehen, welche aus einer Brenngasversorgung 20 mit einem brennbaren Gas gespeist wird. Die Zumesseinheit 40 umfasst dabei ein Brenngaszumessventil 60, welchem in Strömungsrichtung des brennbaren Gases durch die Zumesseinheit 40 ein Gasdruckregler 42 vorgeschaltet ist. Die Brenngasversorgung 20 weist beispielsweise einen Gastank 22 auf, welcher über eine Gasleitung 34 mit der Zumesseinheit 40 verbunden ist. In der Gasleitung 34 sind in Strömungsrichtung des Gases ein erstes Absperrventil 30, stromabwärts des ersten Absperrventils 30 ein Filter 36, und weiter stromabwärts ein zweites Absperrventil 32 angeordnet. Alternativ kann der Filter 36 auch stromabwärts des Brenngaszumessventils 60 und stromaufwärts der Gemischbildungsvorrichtung 70 angeordnet sein. Der Filter 36 weist vorzugsweise zusätzlich einen Tropfenabscheider auf, um in der Gasleitung 34 kondensierenden Wasserdampf und/oder Kompressoröl aus dem brennbaren Gas abzuscheiden.

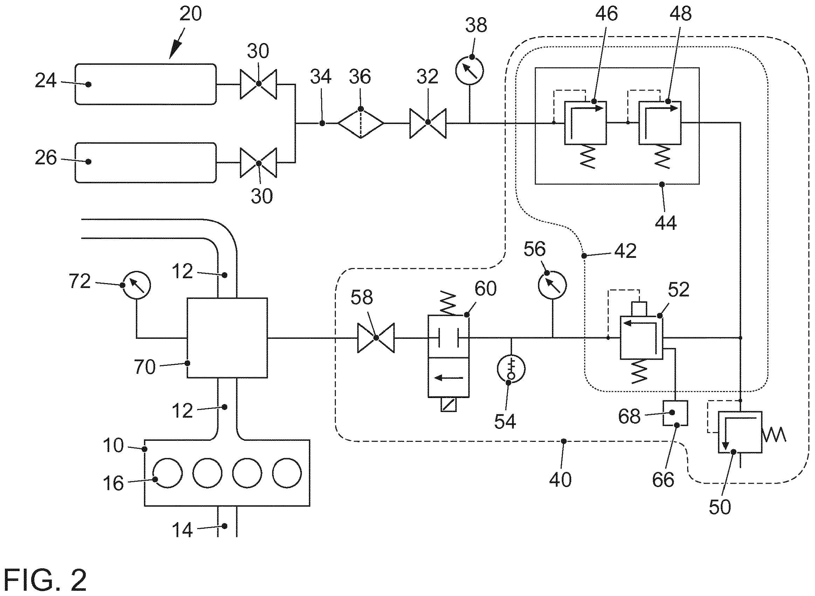

In Figur 2 ist ein Ausführungsbeispiel einer Zumesseinheit 40 einer Gasversorgung 20 für einen mit einem brennbaren Gas betriebenen Verbrennungsmotor 10 dargestellt. Die Zumesseinheit 40 weist einen Gasdruckregler 42 und ein Brenngaszumessventil 60 auf. Der Gasdruckregler 42 umfasst einen Vordruckregler 44 und einen Hauptdruckregler 52, wobei zwischen dem Vordruckregler 44 und dem Hauptdruckregler 52 ein Druckbegrenzungsventil 50 angeordnet ist. Der Gasdruckregler 42 ist mit einem Kompensationselement 66 verbunden, welches einen elektrischen Aktuator 68 aufweist. Stromabwärts des Hauptdruckreglers 52 und stromaufwärts des Brenngaszumessventils 60 sind in oder an der Zumesseinheit 40 ein Temperatursensor 54 und ein Niederdrucksensor 56 zur Erfassung von Druck und Temperatur stromabwärts des Gasdruckreglers 42 vorgesehen. Stromabwärts des Brenngaszumessventils 60 ist ein drittes Absperrventil 58 vorgesehen, mit welchem die Brenngasversorgung 20? von der Gemischbildungsvorrichtung 70 fluidisch getrennt werden kann. Die Messdaten des Temperatursensors 54 und des Niederdrucksensors 56 werden an ein Steuergerät des Verbrennungsmotors 10 übermittelt und können somit zur Vorsteuerung der Gasmenge genutzt werden.

Der Vordruckregler 44 kann einstufig oder mehrstufig ausgeführt werden, bevorzugt ist der Vordruckregler 44 wie in Figur 2 dargestellt zweistufig mit einem ersten Vordruckregler 46 und einem zweiten Vordruckregler 48 ausgeführt. Die Gasversorgung 20 umfasst mindestens einen Gastank 24, 26, vorzugsweise einen ersten Gastank 24 und einen zweiten Gastank 26, insbesondere eine erste und eine zweite Gasflasche, besonders bevorzugt sechs Gasflaschen, aus welchen die Zumesseinheit 40 mit einem brennbaren Gas, vorzugsweise mit unter Druck bevorratetem Erdgas (CNG - Compressed Natural Gas), gespeist wird. Die Gastanks 24, 26 weisen jeweils ein erstes Absperrventil 30 auf, mit denen ein Austreten von Gas aus dem jeweiligen Gastank 24, 26 unterbunden werden kann. Die beiden Gastanks 24, 26 werden in einer gemeinsamen Gasleitung 34 zusammengefasst, wobei die gemeinsame Gasleitung 34 einen Filter 36 mit einem Partikelabscheider und einem Tröpfchenabscheider aufweist, um Verunreinigungen und kondensierenden Wasserdampf aus dem brennbaren Gas zu entfernen. Stromab des Filters 36 und stromaufwärts des Gasdruckreglers 42 sind ein weiteres Absperrventil 32 und ein Gasdrucksensor 38 angeordnet, mit dem ein Eingangsdruck der Gasversorgung, welcher im Wesentlichen dem Druck in dem mit der Zumesseinheit 40 ? verbunden Gastank 24, 26 entspricht, gemessen werden kann. Das Absperrventil 32 kann alternativ auch in den Gasdruckregler 42 integriert sein.

An der Gemischbildungsvorrichtung 70 ist ein weiterer Drucksensor 72 angeordnet, mit welchem ein Druck in der Gemischbildungsvorrichtung 70, insbesondere in einem Ansaugkanal des Ansaugtraktes 12, gemessen werden kann. Der Gasdruckregler 42 und das Brenngaszumessventil 60 der Zumesseinheit 40 sind vorzugsweise in einem gemeinsamen Gehäuse angeordnet, können alternativ auch getrennt in unterschiedlichen Gehäusen angeordnet sein. Der Gasdruckregler 42 weist vorzugsweise eine Beheizungsmöglichkeit, insbesondere einen elektrischen Heizwiderstand oder eine Beheizung mittels des Kühlwassers des Verbrennungsmotors 10 auf, um Funktionsstörungen durch Einfrieren durch die Expansionskälte beim Expandieren des brennbaren Gases zu vermeiden.

Im Betrieb des Verbrennungsmotors 10 wird die Gemischbildungsvorrichtung 70 mit brennbarem Gas aus der Brenngasversorgung 20 gespeist. Dazu wird das brennbare Gas unter einem hohen Druck in dem Gastank 24, 26 bevorratet. Durch den Vordruckregler 44 wird der Gasdruck von einem hohen Druck p_{H}, beispielsweise 100 bar, auf einen ersten Druck p₁ von weniger als 10 bar stromabwärts des Vordruckreglers 44 reduziert. Dabei kühlt sich das brennbare Gas durch die Expansion ab. Durch den Hauptdruckregler 52 und das Brenngaszumessventil 60 erfolgt eine weitere Entspannung des brennbaren Gases auf den Druck in der Gemischbildungsvorrichtung 70.

In Kombination mit einem variablen, aber an einen Druck pₛ im Ansaugkanal gekoppelten Druck des brennbaren Gases vor dem Brenngaszumessventil 60 (p₁ > 1,85* p_{N}) ist die durchströmende Massenstromdichte des brennbaren Gases eine Funktion von Gasdruck, Gastemperatur, Gaszusammensetzung und der Ventilgeometrie des Brenngaszumessventils 60. Sie ist dabei im Wesentlichen unabhängig von dem Gasdruck stromabwärts des Brenngaszumessventils 60.

Bei einem aus dem Stand der Technik bekannten Zumessventil ist der Brenngasdruck in der Gaszuführung konstant. Dabei muss das Brenngaszumessventil 60 den gesamten Bedarfsbereich des Verbrennungsmotors 10 als Dynamikumfang abdecken. Bei aufgeladenen Verbrennungsmotoren kann hier das Verhältnis von minimalem Massenstrom zu maximalem Massenstrom bis zu 1:100 betragen. Dies stellt sehr hohe Anforderungen an die Regelung in dem Brenngaszumessventil 60 und macht dies sehr aufwendig und teuer. Wird das brennbare Gas durch eine erfindungsgemäße Zumesseinheit 40 geregelt, so vermindert sich dieses Verhältnis um den Kehrwert des Verhältnisses zwischen minimalem zu maximalem Brenngasdruck vor dem Brenngaszumessventil 60. Dies liegt bei aufgeladenen Verbrennungsmotoren 10 im Bereich von 0,3 : 2,5 = 0,12. Dadurch wird der Regelbereich ca. um den Faktor 10 auf ein Verhältnis 1:6 bis 1:12 vereinfacht oder vermindert. Durch diese Aufteilung sinken die Ansprüche an das Brenngaszumessventil 60, wobei insbesondere gröbere Bauteiltoleranzen und/oder eine einfache Aktorik möglich sind, was die Kosten deutlich reduziert. Das Brenngaszumessventil 60 ist vorzugsweise als Proportionalventil oder als schnell schaltendes Digitalventil ausgeführt.

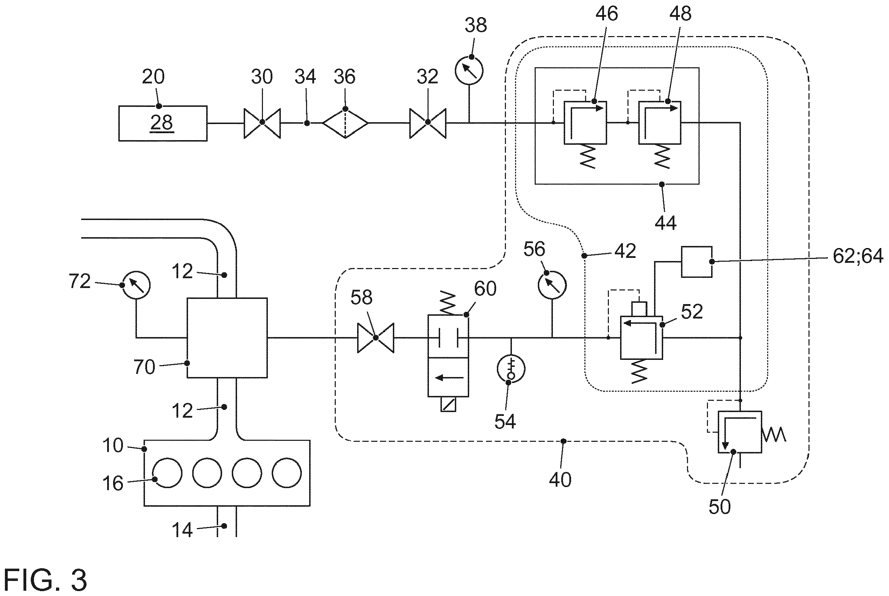

In Figur 3 ist ein Beispiel einer nicht erfindungsgemäßen Zumesseinheit 40 dargestellt. Bei im Wesentlichen gleichem Aufbau wie zu Figur 2 beschrieben wird im Folgenden nur auf die Unterschiede eingegangen. Anstelle eines oder mehrerer Gastanks 24, 26 weist die Brenngasversorgung 20 in dem in Figur 3 dargestellten Beispiel einen stationären Gasanschluss 28 auf. Ferner weist der Gasdruckregler 42 anstelle eines aktiven Kompensationselements 66 eine Unterdruckquelle 62, beispielsweise eine Vakuumpumpe oder einen Unterdruckkanal eines Bremskraftverstärkers, oder eine Vakuumdose 64 auf, um den Gasdruckregler 42 von Druckschwankungen in dem Umgebungsdruck zu entkoppeln und diese Störgröße zumindest teilweise zu eliminieren.

Die Erfindung betrifft also eine Zumesseinheit 40 für einen Verbrennungsmotor 10, welche eingangsseitig mit einer Gasversorgung 20, insbesondere einem Gastank 22, und ausgangsseitig mit einer Gemischbildungsvorrichtung 70 in einem Ansaugtrakt 12 des Verbrennungsmotors 10 verbunden ist. Die Zumesseinheit 40 weist einen Gasdruckregler 42 und ein Brenngaszumessventil 60 auf, über welches die der Gemischbildungsvorrichtung 70 zugeführte Gasmenge geregelt wird. Durch den vorgeschalteten Gasdruckregler 42 kann der Regelbereich des Brenngaszumessventils 60 deutlich verringert werden, wodurch eine einfachere und exaktere Zumessung des Brenngases möglich ist.

Die Erfindung betrifft ferner einen Verbrennungsmotor 10, welcher mit einem brennbaren Gas betrieben wird und an dessen Ansaugtrakt 12 eine solche Zumesseinheit 40 angeordnet ist, sowie ein Verfahren zur Druckregelung in einer solchen Zumesseinheit 40.

### Bezugszeichenliste

- 10: Verbrennungsmotor
- 12: Ansaugtrakt
- 14: Abgastrakt
- 16: Brennraum
- 18: Abgasrückführung
- 20: Brenngasversorgung
- 22: Gastank
- 24: erster Gastank
- 26: zweiter Gastank
- 28: Gasanschluss
- 30: erstes Absperrventil
- 32: zweites Absperrventil
- 34: Gasleitung
- 36: Filter
- 38: Gasdrucksensor
- 40: Zumesseinheit
- 42: Gasdruckregler
- 44: Vordruckregler
- 46: erster Vordruckregler
- 48: zweiter Vordruckregler
- 50: Druckbegrenzungsventil / Sicherheitsventil
- 52: Hauptdruckregler
- 54: Temperatursensor
- 56: Niederdrucksensor
- 58: drittes Absperrventil
- 60: Brenngaszumessventil
- 62: Unterdruckquelle
- 64: Vakuumdose
- 66: Kompensationselement
- 68: elektrischer Aktuator
- 70: Gemischbildungsvorrichtung
- 72: Drucksensor
- 74: Turbolader
- 76: Verdichter
- 78: Turbine
- 80: Abgasrückführungsventil
- p_{H}: Hochdruck
- p₁: Druck zwischen Vordruckregler und Brennstoffzumessventil
- p_{N}: Niederdruck nach dem Brennstoffzumessventil
- p_{S}: Druck im Saugrohr

## Patentansprüche

1. Zumesseinheit (40) für einen mit einem brennbaren Gas betriebenen Verbrennungsmotor (10), wobei die Zumesseinheit (40) eingangsseitig zumindest mittelbar mit einer Brenngasversorgung (20) verbindbar ist, und wobei die Zumesseinheit (40) ausgangsseitig mit einer Gemischbildungsvorrichtung (70) zur Brennstoffaufbereitung des Verbrennungsmotors (10) verbindbar ist, wobei die Zumesseinheit (40) einen Gasdruckregler (42) und ein Brenngaszumessventil (60) aufweist, und wobei das Brenngaszumessventil (60) geregelt ist, wobei der Gasdruckregler (42) einen Vordruckregler (44) und einen in Strömungsrichtung des brennbaren Gases durch die Zumesseinheit (40) dem Vordruckregler (44) nachgeschalteten Hauptdruckregler (52) aufweist, wobei zwischen dem Vordruckregler (44) und dem Hauptdruckregler (52) ein Druckbegrenzungsventil (50) angeordnet ist, und wobei der Gasdruckregler (42) mittels einer Zusatzkraft belastet ist, **dadurch gekennzeichnet, dass** der Gasdruckregler (42) ein Kompensationselement (66) aufweist, mit welchem auf den Gasdruckregler (42) wirkende Störgrößen aktiv eliminiert werden, wobei das Kompensationselement (66) einen elektrischen Aktuator (68) umfasst.

2. Zumesseinheit (40) nach Anspruch 1, **dadurch gekennzeichnet, dass** die Zusatzkraft mittels einer Feder ausgeübt wird.

3. Zumesseinheit (40) nach einem der Ansprüche 1 oder 2, **dadurch gekennzeichnet, dass** der Gasdruckregler (42) mit einer Unterdruckquelle (62) verbunden ist.

4. Zumesseinheit (40) nach Anspruch 3, **dadurch gekennzeichnet, dass** die Unterdruckquelle (62) eine Vakuumdose (64) ist.

5. Zumesseinheit (40) nach Anspruch 1, **dadurch gekennzeichnet, dass** das Kompensationselement (66) eine Unterdruckdose umfasst.

6. Zumesseinheit (40) nach einem der Ansprüche 1 bis 5, **dadurch gekennzeichnet, dass** das Brenngaszumessventil (60) als ein Proportionalventil mit einem stetig verstellbaren Ventilquerschnitt ausgebildet ist.

7. Zumesseinheit (40) nach Anspruch 6, **dadurch gekennzeichnet, dass** das Brenngaszumessventil (60) eine Absperrfunktion aufweist.

8. Zumesseinheit (40) nach Anspruch 6, **dadurch gekennzeichnet, dass** dem Brenngaszumessventil (60) eine Absperrvorrichtung, insbesondere ein Absperrventil (58), vorgeschaltet oder nachgeschaltet ist.

9. Zumesseinheit (40) nach einem der Ansprüche 6 bis 8, **dadurch gekennzeichnet, dass** das Brenngaszumessventil (60) als druckausgeglichenes Ventil ausgeführt ist.

10. Zumesseinheit (40) nach einem der Ansprüche 1 bis 9, **dadurch gekennzeichnet, dass** die Zumesseinheit (40) einen Drucksensor (56) und/oder einen Temperatursensor (54) aufweist.

11. Verbrennungsmotor (10) mit einem Ansaugtrakt (12), mindestens einem Brennraum (16) sowie einem Abgastrakt (14), wobei im Ansaugtrakt (12) eine Gemischbildungsvorrichtung (70) angeordnet ist, und wobei die Gemischbildungsvorrichtung (70) durch eine Zumesseinheit (40) gemäß einem der Ansprüche 1 bis 10 mit einem brennbaren Gas aus einer Brenngasversorgung (20) versorgt wird.

12. Verfahren zur Druckregelung in einer Zumesseinheit (40) nach einem der Ansprüche 1 bis 10 eines mit einem brennbaren Gas betriebenen Verbrennungsmotors (10), umfassend folgende Schritte:
- Regelung des Brenngasdrucks in Abhängigkeit von einem in einem Ansaugtrakt (12) des Verbrennungsmotors (10) ermittelten Druck durch den Gasdruckregler (42),
- Beaufschlagung des Brenngaszumessventils (60) mit dem durch den Gasdruckregler (42) eingestellten Druck,
- Eindosierung der Gasmenge des brennbaren Gases in die Gemischbildungsvorrichtung (70) durch das Brenngaszumessventil (60).

13. Verfahren zur Druckregelung in einer Zumesseinheit (40) nach Anspruch 12, **dadurch gekennzeichnet, dass** eine Regelung des Brenngasdrucks auf ein Vielfaches des jeweiligen Druckes in der Gemischbildungsvorrichtung (70) erfolgt.

## Claims

1. Metering unit (40) for a combustion engine (10) which is operated with a combustible gas, wherein the metering unit (40) is connectable on its input side at least indirectly to a combustible gas supply (20), and wherein the metering unit (40) is connectable on its output side to a mixture-forming device (70) for preparing fuel for the combustion engine (10), wherein the metering unit (40) has a gas pressure regulator (42) and a combustion gas-metering valve (60), and wherein the combustion gas-metering valve (60) is controlled, wherein the gas pressure regulator (42) has an admission pressure regulator (44) and a main pressure regulator (52) which is connected downstream of the admission pressure regulator (44) in the direction of flow of the combustible gas through the metering unit (40), wherein a pressure-limiting valve (50) is arranged between the admission pressure regulator (44) and the main pressure regulator (52), and wherein the gas pressure regulator (42) is loaded by an additional force, **characterized in that** the gas pressure regulator (42) has a compensation element (66) with which interference variables acting on the gas pressure regulator (42) are actively eliminated, wherein the compensation element (66) comprises an electric actuator (68).

2. Metering unit (40) according to Claim 1, **characterized in that** the additional force is exerted by means of a spring.

3. Metering unit (40) according to one of Claims 1 and 2, **characterized in that** the gas pressure regulator (42) is connected to an under-pressure source (62).

4. Metering unit (40) according to Claim 3, **characterized in that** the under-pressure source (62) is a vacuum can (64).

5. Metering unit (40) according to Claim 1, **characterized in that** the compensation element (66) comprises a vacuum actuator.

6. Metering unit (40) according to one of Claims 1 to 5, **characterized in that** the combustion gas-metering valve (60) is embodied as a proportional valve with a continuously adjustable valve cross section.

7. Metering unit (40) according to Claim 6, **characterized in that** the combustion gas-metering valve (60) has a shut-off function.

8. Metering unit (40) according to Claim 6, **characterized in that** a shut-off device, in particular a shut-off valve (58), is connected upstream or downstream of the combustion gas-metering valve (60).

9. Metering unit (40) according to one of Claims 6 to 8, **characterized in that** the combustion gas-metering valve (60) is embodied as a pressure-equalized valve.

10. Metering unit (40) according to one of Claims 1 to 9, **characterized in that** the metering unit (40) has a pressure sensor (56) and/or a temperature sensor (54).

11. Combustion engine (10) with an intake section (12), at least one combustion chamber (16) and an exhaust section (14), wherein a mixture-forming device (70) is arranged in the intake section (12), and wherein the mixture-forming device (70) is supplied with a combustible gas from a combustible gas supply (20) by a metering unit (40) according to one of Claims 1 to 10.

12. Method for regulating pressure in a metering unit (40) according to one of Claims 1 to 10 of a combustion engine (10) which is operated with a combustible gas, comprising the following steps:
- controlling the combustion gas pressure by means of the gas pressure regulator (42) as a function of a pressure determined in an intake section (12) of the combustion engine (10),
- applying the pressure set by the gas pressure regulator (42) to the combustion gas-metering valve (60), and
- dosing the quantity of the combustible gas into the mixture-forming device (70) by means of the combustion gas-metering valve (60).

13. Method for regulating pressure in a metering unit (40) according to Claim 12, **characterized in that** the combustion gas pressure is regulated to a multiple of the respective pressure in the mixture-forming device (70).

## Revendications

1. Unité de dosage (40) destinée à un moteur à combustion interne (10) fonctionnant avec un gaz combustible, l'unité de dosage (40) pouvant être du côté entrée reliée au moins indirectement à une alimentation en gaz combustible (20), et l'unité de dosage (40) pouvant être reliée du côté sortie à un dispositif de formation de mélange (70) destiné à préparer du carburant pour le moteur à combustion interne (10), l'unité de dosage (40) comportant un régulateur de pression de gaz (42) et une soupape de dosage de gaz combustible (60), et la soupape de dosage de gaz combustible (60) étant régulée, le régulateur de pression de gaz (42) comportant un régulateur de pression d'alimentation (44) et un régulateur de pression principal (52) monté en aval du régulateur de pression d'alimentation (44) dans le sens d'écoulement du gaz combustible à travers l'unité de dosage (40), une soupape de limitation de pression (50) étant disposée entre le régulateur de pression d'alimentation (44) et le régulateur de pression principal (52), et le régulateur de pression de gaz (42) étant chargé au moyen d'une force supplémentaire, **caractérisée en ce que** le régulateur de pression de gaz (42) comporte un élément de compensation (66) permettant d'éliminer activement les grandeurs de perturbation agissant sur le régulateur de pression de gaz (42), l'élément de compensation (66) comprenant un actionneur électrique (68).

2. Unité de dosage (40) selon la revendication 1, **caractérisée en ce que** la force supplémentaire est exercée au moyen d'un ressort.

3. Unité de dosage (40) selon l'une des revendications 1 et 2, **caractérisée en ce que** le régulateur de pression de gaz (42) est relié à une source de vide (62).

4. Unité de dosage (40) selon la revendication 3, **caractérisée en ce que** la source de vide (62) est une prise de vide (64).

5. Unité de dosage (40) selon la revendication 1, **caractérisée en ce que** l'élément de compensation (66) comprend une prise de vide.

6. Unité de dosage (40) selon l'une des revendications 1 à 5, **caractérisée en ce que** la soupape de dosage de gaz combustible (60) est réalisée sous la forme d'une soupape proportionnelle dont la section est réglable en continu.

7. Unité de dosage (40) selon la revendication 6, **caractérisée en ce que** la soupape de dosage de gaz combustible (60) comporte une fonction d'arrêt.

8. Unité de dosage (40) selon la revendication 6, **caractérisée en ce que** la soupape de dosage de gaz combustible (60) est montée en amont ou en aval d'un dispositif d'arrêt, notamment une soupape d'arrêt (58).

9. Unité de dosage (40) selon l'une des revendications 6 à 8, **caractérisée en ce que** la soupape de dosage de gaz combustible (60) est réalisée sous la forme d'une soupape équilibrée en pression.

10. Unité de dosage (40) selon l'une des revendications 1 à 9, **caractérisée en ce que** l'unité de dosage (40) comporte un capteur de pression (56) et/ou un capteur de température (54).

11. Moteur à combustion interne (10) comprenant un conduit d'admission (12), au moins une chambre de combustion (16) et un conduit de gaz d'échappement (14), un dispositif de formation de mélange (70) étant disposé dans le conduit d'admission (12), et le dispositif de formation de mélange (70) étant alimenté en gaz combustible à partir d'une alimentation en gaz combustible (20) par le biais d'une unité de dosage (40) selon l'une des revendications 1 à 10.

12. Procédé de régulation de pression dans une unité de dosage (40) selon l'une des revendications 1 à 10 d'un moteur à combustion interne (10) fonctionnant avec un gaz combustible, le procédé comprenant les étapes suivantes :
- réguler la pression de gaz combustible en fonction d'une pression déterminée dans un conduit d'admission (12) du moteur à combustion interne (10) par le biais du régulateur de pression de gaz (42),
- soumettre la soupape de dosage de gaz combustible (60) à la pression réglée par le régulateur de pression de gaz (42),
- injecter de manière dosée la quantité du gaz combustible dans le dispositif de formation de mélange (70) par le biais de la soupape de dosage de gaz combustible (60).

13. Procédé de régulation de la pression dans une unité de dosage (40) selon la revendication 12, **caractérisé en ce que** la pression du gaz combustible est régulée à un multiple de la pression respective dans le dispositif de formation de mélange (70).
